# FASCICULE DE BREVET EUROPEEN

(11) **EP 0 841 646 B1**
(45) Date de publication et mention de la délivrance du brevet: **15.01.2003**
(21) Numéro de dépôt: 97118994.9
(22) Date de dépôt: 31.10.1997
(51) Int. Cl.: G08C 17/04, G08C 15/00, B62M 25/08

(54) **Systéme de commande et/ou de mesure à liaison sans fil pour cycle**
Drahtloses Steuerungs- und/oder Messsystem für Fahrrad
Wireless control and/or measurement system for bicycle

(30) Priorité: 07.11.1996 FR 9613849
(43) Date de publication de la demande: 13.05.1998
(73) Titulaire: MAVIC S.A., 01990 Saint-Trivier sur Moignans (FR)
(72) Inventeur: Kubacsi, Michel, 01600 Toussieux (FR)
(74) Mandataire: Lejeune, Benoit

(56) Documents cités:
- EP-A- 0 402 620
- EP-A- 0 416 325
- EP-A- 0 516 113
- DE-A- 3 508 562
- DE-A- 4 212 321
- DE-A- 19 537 394
- FR-A- 2 331 925
- FR-A- 2 654 698
- FR-A- 2 674 658
- US-A- 5 008 647
- US-A- 5 056 107
- US-A- 5 422 887
- PATENT ABSTRACTS OF JAPAN vol. 017, no. 253 (E-1367), 19 mai 1993 & JP 04 373287 A (NEC CORP;OTHERS: 01), 25 décembre 1992,

## Description

L'invention est relative à un système de transmission de signaux sans fil pour cycle.

En général, l'actionnement des organes principaux d'une bicyclette, tels que les dérailleurs et les freins, est commandé par des organes mécaniques. Le plus souvent, on prévoit des poignées ou leviers sur le guidon ou le cadre qui sont reliés par des câbles aux organes correspondants : frein avant, frein arrière, dérailleur (avant) pour positionner la chaîne sur un plateau et dérailleur (arrière) pour positionner la chaîne sur un pignon.

Ces actionnements mobilisent l'attention du cycliste et exigent parfois des efforts.

Pour remédier à ces inconvénients, le brevet français 2 654 698 propose un système de télécommande sans fil avec un émetteur installé sur le guidon qui transmet des signaux vers les freins et vers les dérailleurs. Le système proposé comporte aussi un affichage de paramètres de fonctionnement.

La portée de l'émetteur est réduite, ne dépassant pas deux mètres.

Cependant, la technique proposée n'a pas pu, pour l'instant, faire l'objet de réalisations pratiques car elle n'apporte pas de solution aux problèmes essentiels à résoudre pour ce type de système.

En particulier, comme mentionné dans ledit brevet français, les émetteurs et récepteurs doivent être dans des positions telles qu'il ne se présente pas de perturbations de transmission constituées par des obstacles tels que le cycliste lui-même. Quand l'émetteur se trouve à l'avant, par exemple sur le guidon, et le récepteur à l'arrière, en particulier au niveau des dérailleurs ou des freins, il n'est pas possible de réaliser cette condition.

L'invention remédie à cet inconvénient.

Selon un premier de ses aspects, elle concerne un système de commande et/ou de mesure sans fil pour cycle(s) qui comprend un émetteur de signaux de commande et/ou d'interrogation à faible portée prévu pour générer et transmettre des signaux de commande codés et un récepteur de commande d'un organe du cycle. Le système est caractérisé en ce que la fréquence porteuse d'émission est comprise entre 10 et 150 kHz et que les signaux transmis par l'émetteur sont des messages numériques comportant un mot code propre au système.

Dans la gamme de fréquence choisie le corps humain est transparent, ce qui permet une commande ou une interrogation disposée devant le cycliste et un récepteur disposé à l'arrière du cycliste.

La faible directivité du signal permet une réalisation simple des antennes et le code propre au système évite que l'émetteur d'un cycle ne vienne actionner un organe, tel que le dérailleur, d'un autre cycle circulant à proximité.

Pour résoudre ce dernier problème (non actionnement d'un organe de cycle voisin), il est aussi possible de limiter la portée de l'émetteur. Mais on a constaté que cette limitation n'est pas suffisante pour résoudre ce problème, car cette portée est au moins égale à la distance entre le guidon et le dérailleur arrière et, avec cette portée, le récepteur d'un cycle à proximité reçoit nécessairement un signal émis.

Si le récepteur d'un cycle capte une émission provenant d'un émetteur d'un autre cycle, ce récepteur ne provoquera pas un actionnement indésiré (ou une mesure indésirée), car il saura reconnaître que le message ne lui est pas destiné.

Selon l'invention la fréquence porteuse d'émission est comprise entre 10 et 150 kHz.

Dans cette gamme de fréquences, les ondes électromagnétiques ne sont pratiquement pas perturbées par le corps humain et par le cadre du cycle. En outre, les signaux de radiotélévision sont à des gammes de fréquence différentes. Enfin, ces fréquences permettent une bande passante confortable pour la transmission de messages numériques entre l'émetteur et les récepteurs.

Étant donné que, dans un système de communication sans fil, il est pratiquement inévitable qu'un récepteur capte des signaux qui ne lui sont pas destinés, si la réception d'un signal perturbateur intervient en même temps que la réception d'un signal utile, ce dernier signal risquera de ne pas être reçu de façon correcte. Dans ce cas, la commande correspondante ne sera pas exécutée. Le signal perturbateur peut provenir soit du même cycle, soit d'un autre cycle.

Pour empêcher une telle perturbation, l'invention prévoit un moyen de détection de signaux émis par d'autres systèmes, et l'émetteur débute l'émission de son signal de commande seulement quand aucun signal perturbateur n'est détecté. La détection des signaux perturbateurs est effectuée soit au voisinage de l'émetteur, soit au voisinage du (ou des) récepteur(s).

Dans une réalisation, on prévoit un moyen pour que l'émission d'un signal ne soit effectuée qu'après un temps déterminé T_{E} suivant un ordre d'émission si, au moment de cet ordre, un signal perturbateur est détecté, la durée T_{E} correspondant à une durée d'émission d'un signal de commande. Avec cette disposition, les signaux de commande, qui ne peuvent être émis simultanément, sont émis dans l'ordre de la succession temporelle des demandes d'émission.

Les durées d'émission de chaque message étant de l'ordre de quelques millisecondes, en cas d'émissions simultanées, le retard entre l'ordre de commande initié par le cycliste et la réalisation effective de la commande sera au plus d'environ 100 ms, ce qui est parfaitement compatible avec un fonctionnement correct.

Il peut se produire que le signal perturbateur atteigne le récepteur mais non l'émetteur. Dans ce cas, s'il n'existe pas un émetteur secondaire couplé au récepteur pour communiquer avec l'émetteur principal, l'émetteur n'aura pas d'information sur la perturbation. Pour résoudre ce problème, dans une réalisation, on prévoit d'émettre de façon répétée chaque message de commande, la durée séparant l'émission de deux messages identiques successifs étant aléatoire, par exemple égale à un nombre entier de durées T_{E} d'émission de message. Dans ce cas, il est préférable que le message répété contienne une information sur son rang, des moyens étant prévus pour que le message répété soit inopérant si l'action commandée avait déjà été réalisée à l'issue du premier message.

Dans une réalisation, on affecte à chaque message ou signal de commande, une indication sur la priorité de son exécution. Par exemple, une commande de freinage ou une commande de changement de vitesse est prioritaire par rapport à une lecture d'un paramètre de fonctionnement de la bicyclette. Dans ce cas, l'émission du signal de priorité permet que la commande prioritaire soit émise avant les autres.

Dans le mode de réalisation préféré de l'invention, la modulation des informations émises, de préférence numériques, est une modulation de fréquence qui présente l'avantage d'accepter un signal de grande dynamique et ainsi de résoudre, de façon simple, les problèmes de dispersions d'un émetteur à un autre, d'usure des piles, et de positionnements différents des ensembles électroniques sur un cycle. En outre cette modulation de fréquence est peu sensible aux parasites.

Selon un autre de ses aspects, l'invention concerne un système de commande et/ou de mesure sans fil pour cycle qui permet de minimiser la consommation d'énergie électrique et donc de maximiser la durée de vie des piles électriques alimentant les émetteurs et les récepteurs et de minimiser leur poids.

Pour résoudre ce problème lorsque l'émetteur/récepteur n'est pas utilisé, soit parce que le cycle lui-même n'est pas utilisé, soit parce que l'utilisateur ne fait pas appel à la commande et/ou à l'interrogation, l'invention prévoit de mettre en veille, avec une consommation d'énergie négligeable, le récepteur après l'écoulement d'un temps déterminé, par exemple de l'ordre de quelques minutes, pendant lequel le récepteur n'a pas reçu de signal.

La mise en veille consiste à interrompre l'alimentation du récepteur et la rétablir périodiquement, la durée d'alimentation du récepteur étant faible par rapport à la durée d'arrêt. Dans un exemple, sur chaque période de 5 secondes l'arrêt dure 4950 millisecondes et l'alimentation dure 50 millisecondes. La durée d'alimentation est ainsi inférieure à environ 1% de la durée d'arrêt.

Pour remettre le récepteur en écoute (alimentation) permanente on prévoit que l'émetteur envoie un signal d'une durée au moins égale à la période. Ce signal, ou trame, est d'un format tel qu'il peut être saisi ou détecté par le récepteur pendant sa durée d'alimentation et le récepteur comporte un moyen pour se positionner en écoute suite à la réception de ce message. La trame émise constitue en quelque sorte un interrupteur pour mettre en écoute le (ou les) récepteur(s). A la suite de la réception de ce message le récepteur reste en écoute (alimenté) pendant une durée minimale, par exemple également de l'ordre de quelques minutes.

La trame de réveil, d'une durée au moins égale à la période, est engendrée par exemple lorsqu'une commande, telle qu'un changement de vitesse, est actionnée.

Ainsi, quand le cycle n'est pas utilisé, il n'est pas nécessaire de mettre en oeuvre un interrupteur pour minimiser la consommation des piles étant donné que la mise en veille s'effectue automatiquement, et la remise en route s'effectue aussi de façon simple sans organe de commande supplémentaire.

La consommation des récepteurs en fonctionnement normal peut également, de manière analogue, être réduite en mettant périodiquement à l'arrêt le récepteur. Toutefois, la période devra être sensiblement plus courte que dans le cas précédent afin que les ordres puissent être exécutés rapidement. Par exemple, la période est de 40 millisecondes, ce qui permet l'exécution d'un ordre en moins de 100 millisecondes.

Ainsi tant en période de non-utilisation qu'en période d'utilisation, on peut minimiser la consommation d'énergie électrique en prévoyant un arrêt périodique des récepteurs et la mise en route du récepteur en écoute permanente par l'émission d'une trame de réveil.

D'autres caractéristiques et avantages de l'invention apparaîtront avec la description de certains de ses modes de réalisation, celle-ci étant effectuée en se référant aux dessins ci-annexés sur lesquels :
la figure 1 montre une bicyclette équipée d'un système selon l'invention,
la figure 2 est un schéma d'un dispositif de commande du dérailleur arrière de la bicyclette représentée sur la figure 1,
la figure 3 est un schéma, vu de dessus, montrant deux bicyclettes côte à côte équipées, chacune, d'un système selon l'invention,
la figure 4 est un diagramme montrant la structure d'un message émis par le système selon l'invention, et
les figures 5, 6 et 7 sont des diagrammes montrant des propriétés d'un système selon l'invention.

Le mode de réalisation de l'invention que l'on va décrire avec les figures se rapporte à un équipement de bicyclette. Cette bicyclette 10 comporte, de façon classique, un guidon 11 sur lequel sont disposés tous les organes de commande, à savoir, les poignées de frein 12 et la commande 13 des dérailleurs avant 14 et arrière 15. Une poignée de frein d'un côté commande l'actionnement des patins sur la roue avant, et la poignée de frein de l'autre côté commande l'actionnement de patins sur la roue arrière.

Le dérailleur avant 14 comprend une fourche de guidage de la chaîne 16 déplaçable latéralement, c'est-à-dire dans une direction horizontale sensiblement perpendiculaire à la direction d'avancement du cycle de façon à installer cette chaîne 16 sur un plateau denté sélectionné 17, le cycle comprenant, par exemple, trois plateaux de diamètres différents.

Le dérailleur arrière 15 est également un élément de guidage de la chaîne 16 déplaçable latéralement de façon que cette chaîne coopère avec un pignon sélectionné 18, le cycle étant équipé de plusieurs pignons concentriques de diamètres différents qui sont montés sur le moyeu de la roue arrière 19. Ce dérailleur 15 comporte aussi des moyens de renvoi 20 à ressort pour garder la chaîne 16 constamment tendue.

Dans l'exemple, le dérailleur arrière 15 est du type de celui décrit dans le brevet européen n°558 425 auquel on se rapportera pour plus de précision.

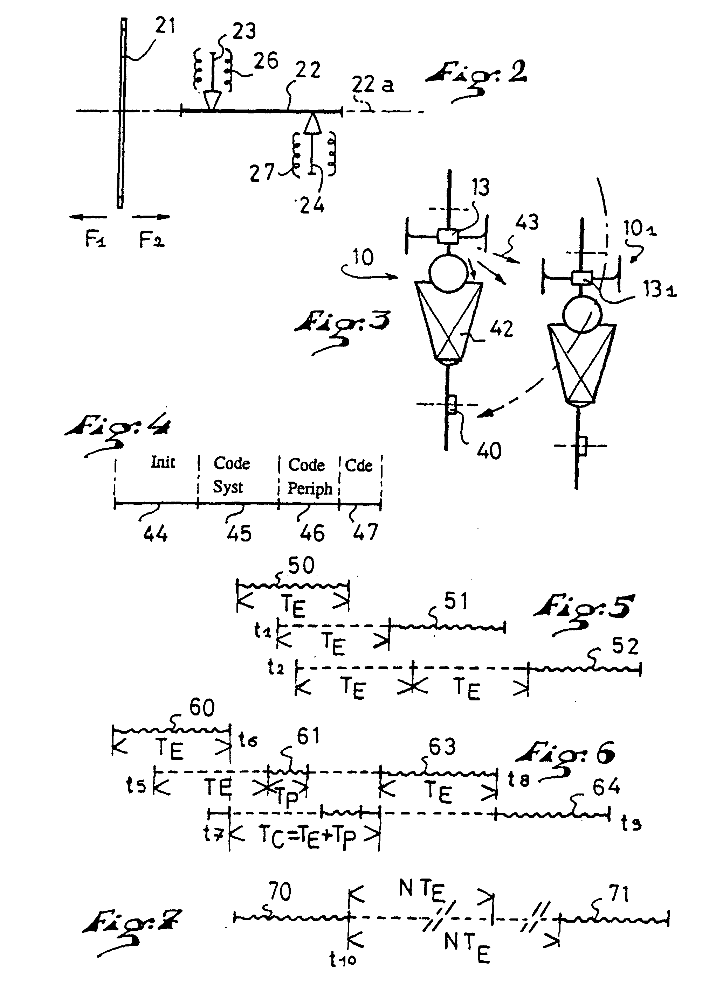

En bref, ce dérailleur arrière comporte (figure 2) une roue dentée 21 entraînée en rotation par la chaîne 16 et qui coopère avec un élément allongé 22 déplaçable selon son axe 22a en un mouvement alternatif, ce mouvement rectiligne étant provoqué par la rotation de la roue dentée 21.

L'élément allongé 22 comporte, sur chacun de ses grands côtés, des alvéoles (non montrées) de réception de doigts 23 et 24. Les doigts 23 et 24 sont déplaçables transversalement par rapport à l'axe 22a. Le déplacement de ces doigts 23 et 24 s'effectue grâce à l'alimentation d'électroaimants, respectivement 26 et 27, et grâce à des moyens de rappels à ressort (non montrés). Les axes des doigts 23 et 24 ont une position fixe par rapport au cadre 30 de la bicyclette 10.

La forme des alvéoles coopérant avec le doigt 23 est telle que l'élément 22 est retenu par le doigt 23 quand l'effort exercé par la roue 21 sur l'élément 22 s'exerce dans un sens, cet élément 22 n'étant pas retenu quand l'effort s'exerce dans l'autre sens. Il en résulte que la coopération du doigt 23 avec une alvéole correspondante de l'élément 22 entraîne, par réaction, un déplacement de la roue dentée 21 dans un sens déterminé, par exemple celui de la flèche F₁ (figure 2).

Le doigt 24 coopère avec d'autres alvéoles ayant des formes telles que cette coopération provoque le déplacement latéral de la roue 21 dans le sens contraire, c'est-à-dire celui de la flèche F₂.

L'actionnement du doigt 23 permet ainsi de déplacer la chaîne 16 vers un pignon de plus grand diamètre et l'actionnement du doigt 24 déplace la chaîne 16 vers un pignon de plus petit diamètre.

L'alimentation électrique des électroaimants 26 et 27 est commandée par des boutons ou analogues sur le guidon. On peut d'ailleurs prévoir des interrupteurs en parallèle de façon à disposer les commandes de changement de vitesse en plusieurs endroits sur le guidon.

Dans ledit brevet européen 558 425, la pile électrique pour l'alimentation des électroaimants 26 et 27 est solidaire du guidon et des fils sont prévus entre la pile et les interrupteurs au guidon et les dits électroaimants.

Le système selon l'invention est du type sans fil, c'est-à-dire qu'on prévoit, à portée de main du cycliste, sur le guidon dans l'exemple, un boîtier 13 émetteur d'un signal de commande vers un dispositif de réception 40, solidaire de la fourche 41. Le dispositif de réception, ou récepteur, 40 décode les signaux provenant du boîtier 13 et alimente, selon les signaux reçus, les électroaimants 26 et 27.

L'émetteur prévu dans le boîtier 13, solidaire du guidon, émet vers le dispositif 40 à proximité de l'axe de la roue arrière 19. Le cycliste 42 (figure 3) se trouve donc sur le chemin des ondes 43 entre le boîtier 13 et le récepteur 40. C'est pourquoi, selon un aspect important de l'invention, les ondes électriques émises par l'émetteur 13 sont des signaux à une fréquence porteuse telle que, pour ces fréquences, le corps humain 42 soit transparent.

Dans l'exemple, la fréquence porteuse est choisie entre 10 kHz et 150 kHz. Pour que le corps humain ne constitue pas un obstacle, on peut, cependant, choisir une fréquence inférieure à 10 kHz. Mais il est préférable de ne pas descendre au-dessous de cette valeur pour permettre une bande passante suffisante, autorisant une durée suffisamment courte pour la transmission de signaux.

La limite supérieure, de 150 kHz environ, est surtout imposée par des contraintes légales, les fréquences supérieures étant réservées à des transmissions particulières.

Un autre avantage de ces fréquences est que le champ électrique généré s'affaiblit rapidement à partir de l'émetteur du boîtier 13. De cette manière, on peut limiter la portée de l'émetteur de façon à diminuer le risque de perturbations des cycles équipés d'un système équivalent et qui circulent à proximité. On choisira ainsi une portée du signal d'émission de l'ordre de 1,5 à 2 mètres.

Enfin, pour ladite gamme de fréquences, les pièces métalliques du cycle ont peu d'effet perturbateur.

Toutefois, pour cette gamme de fréquences de 10 à 150 kHz, le signal émis est peu directif. L'émetteur 13 émet ainsi dans toutes les directions et donc dans des directions non souhaitées, notamment sur les côtés et vers l'avant, là où peuvent se trouver d'autres bicyclettes équipées d'un système analogue. Sur la figure 3, on voit qu'un cycle voisin 10₁ risque d'être soumis au champ électrique provenant de l'émetteur 13. De même, le cycle 10 est soumis au champ électrique de l'émetteur du boîtier 13₁ du cycle 10₁.

Selon un autre aspect important de l'invention, on prévoit donc des moyens pour que le signal de l'émetteur actionne seulement le dérailleur arrière 15 du cycle 10 et non le dérailleur d'un autre cycle, tel que le cycle 10₁.

De façon plus générale, on prévoit des moyens pour que le signal provenant de l'émetteur du boîtier 13, et destiné à un organe périphérique récepteur (afin d'actionner un organe, de le tester ou d'effectuer une mesure) soit destiné à ce seul organe périphérique sur le même cycle.

A cet effet, les signaux émis par l'émetteur du boîtier 13 sont de type numérique et comprennent (figure 4) : un mot 44 d'initialisation, un mot, ou code, 45 spécifique au système, c'est-à-dire spécifique à l'émetteur du boîtier 13, et un mot 46 spécifique au périphérique concerné, c'est-à-dire ici spécifique au récepteur 40 de commande du dérailleur 15 du cycle 10. Enfin, le message comprend un mot 47 pour la commande proprement dite du dérailleur. De façon classique, on prévoit aussi des dispositions, telles que des bits de parité et/ou des codes spécifiques, pour limiter les risques d'erreur de transmission.

De cette manière, un message transmis par l'émetteur du boîtier 13 ne perturbera ni un organe quelconque sur le cycle 10₁ circulant à proximité, ni d'autres organes comportant un récepteur sur le même cycle 10.

La structure des messages décrite en relation avec la figure 4 permet d'éviter de commander de façon indésirée un organe. Toutefois, si deux émetteurs émettent des messages simultanément, le récepteur qui sera soumis à deux messages ne pourra pas exécuter le message qui lui est destiné car il sera perturbé par le message arrivant simultanément.

C'est pourquoi on prévoit des moyens pour empêcher que deux émetteurs à proximité l'un de l'autre émettent simultanément (figures 5 et 6).

Chaque boîtier 13 comporte un détecteur (non montré) qui permet de constater, lors de l'actionnement d'une touche de commande d'émission vers le récepteur 40, si un autre émetteur, par exemple celui du boîtier 13₁ du cycle voisin, est en train, ou non, d'émettre un message. Si le détecteur du boîtier 13 ne reçoit aucun message, l'émetteur transmet le message de commande (figure 4) vers le récepteur 40.

Par contre, si le détecteur du boîtier 13 constate qu'un signal perturbateur 50 est émis (figure 5), au moment, t₁, où a été commandé l'émission d'un message vers le récepteur 40, ce message n'est pas émis immédiatement mais est retardé d'une durée T_{E} égale à la durée d'un message. Ce message de commande est alors émis au temps t₁ + T_{E}, à condition qu'à cet instant, aucun autre signal ne soit reçu par le détecteur du boîtier 13. Le message retardé a la référence 51 sur la figure 5.

Si, peu après l'instant t₁ de demande d'émission de message, un autre cycliste, roulant à proximité, émet également, au temps t₂, un autre ordre d'émission de message, le détecteur du système de cet autre cycliste constatera, au temps t₂ + T_{E}, l'émission du signal 51. Ce n'est qu'après l'écoulement d'une nouvelle période T_{E} que débutera l'émission du message 52 pour cette dernière bicyclette, c'est-à-dire au temps t₂ + 2T_{E}.

Le temps T_{E} pouvant être limité à quelques millisecondes, ces divers retards de commande ne perturbent en rien le fonctionnement du dérailleur ou d'un autre organe du cycle.

Enfin, chaque message est pris en compte dans l'ordre où il a été demandé, c'est-à-dire que si les commandes sont effectuées en succession, c'est la première demande qui sera exécutée en premier.

Cependant, il peut être nécessaire d'imposer une priorité à certains messages. Par exemple, une commande d'affichage de vitesse, demandée à partir de l'émetteur du boîtier 13, ou de l'émetteur d'un cycle à proximité, devra être exécutée après une commande de changement de vitesse ou une commande de freinage (si elle existe).

Pour permettre de prendre en compte les priorités, à chaque message est affecté un mot ou signal supplémentaire indiquant si la commande correspondante est prioritaire ou non. De préférence, ce mot indicatif de priorité précède le message de commande, comme représenté sur la figure 6.

Au temps t₅, une demande d'actionnement d'un dérailleur est commandée. Mais, à ce moment, un système voisin émet un message 60 de durée T_{E}. Dans ce cas, au bout d'un temps T_{E} (durée d'un message de commande), la demande d'actionnement est renouvelée automatiquement - c'est-à-dire sans que le cycliste ait à exécuter une nouvelle demande - et, un signal numérique 61, de durée Tₚ, indique une demande prioritaire.

Le message d'actionnement 63 est alors émis au bout d'un temps T_{C}, suivant l'instant t₆ de fin d'émission du message 60 du système voisin. Le temps T_{C} est au moins égal à T_{E} + Tp.

Si un troisième cycliste exerce, au temps t₇, une commande prioritaire, le message 64 correspondant sera émis immédiatement après la fin, à l'instant t₈, de l'émission du signal 63.

De même, si avant l'instant t₆, mais après l'instant t₇, une autre demande de commande prioritaire est émise, le message correspondant sera émis après la fin, à l'instant t₉, de l'émission du message 64.

L'algorithme est ainsi le suivant : quand une demande d'exécution prioritaire est actionnée par un cycliste, le détecteur associé à l'émetteur détermine si un message voisin est en cours d'émission ou non ; en cas de non-détection, il émet immédiatement le message. En cas de détection d'un signal 60, il émet un signal de priorité 61 après l'écoulement d'un temps T_{E} (de préférence, au moins égal à la durée d'un message de commande) suivant l'instant (t₅) de sa première demande ; ensuite, il enregistre, après l'instant t₆ de fin d'émission du signal 60 et jusqu'à l'émission de son signal de priorité 61, le nombre n de signaux de priorité émis par d'autres systèmes. Le message commence à être transmis après l'écoulement d'un temps T_{C} + nT_{E} suivant l'instant t₆ de fin de message détecté lors de sa première demande.

Le récepteur devant exécuter un ordre (dans l'exemple, un changement de vitesse) étant éloigné de l'émetteur du message de commande, il peut se produire que ce récepteur soit pollué par un message d'un système voisin alors que le détecteur associé à l'émetteur correspondant est hors de portée de l'émetteur polluant. Dans cette circonstance, l'algorithme décrit ci-dessus en relation avec la figure 6 est inopérant puisqu'il suppose, en principe, la détection des messages polluants au niveau de l'émetteur.

Pour résoudre ce problème, chaque message de commande 70 (figure 7) est émis une seconde fois (71) après un temps NT_{E} suivant l'instant t₁₀ de fin d'un premier message 70. N est un nombre entier aléatoire compris entre des valeurs N₁, par exemple de l'ordre de 5, et N2, par exemple de l'ordre de 20. Le second message comporte un mot (qui peut être réduit à 1 bit) indiquant son rang (n°2) de façon que si la commande a été exécutée après le premier message, elle ne soit pas exécutée une seconde fois, des moyens (non montrés) étant prévus à chaque récepteur pour enregistrer l'exécution d'une commande suite à la réception d'un message.

Dans une variante, pour résoudre ledit problème lié à la distance séparant le récepteur de l'émetteur, à chaque récepteur est associé un émetteur (non montré) d'accusé de réception. Cet émetteur produit un signal indicatif de l'exécution de la commande qui est destiné au détecteur associé à l'émetteur principal. Si la commande a été exécutée, comme indiqué par le signal d'accusé de réception, l'émetteur ne transmettra pas de nouveau message. Par contre, si un signal d'accusé de réception n'est pas reçu au bout d'un temps N₂T_{E} suivant la fin de l'émission du message, un second message de commande est émis. N₂ est un nombre entier, par exemple de l'ordre de 20. Ce second message contiendra (comme dans le mode de réalisation décrit avec la figure 7) un mot ou signal indiquant son rang afin que l'ordre ne soit pas exécuté une seconde fois si cet ordre a quand même été exécuté malgré le défaut de détection d'un signal d'accusé de réception.

Les dispositions relatives au mode de réalisation décrit en relation avec la figure 7 et sa variante peuvent être utilisées soit en combinaison avec les dispositions décrites avec la figure 6, soit de façon indépendante.

On a décrit jusqu'à présent principalement un système à émetteur et récepteur à liaison sans fil pour une commande de changement de vitesse arrière (changement de pignon). L'invention concerne aussi un changement de vitesse avant (changement de plateau), la commande des freins (avant et arrière), ainsi que la transmission de signaux de mesure. Les signaux de mesure sont, notamment, la vitesse, la puissance du cycliste et plusieurs caractéristiques physiologiques mesurées sur le cycliste telles que son rythme cardiaque mesuré à l'aide d'un cardiofréquencemètre. La puissance développée par le cycliste est déterminée à partir de la vitesse et du couple s'exerçant sur le moyeu arrière. Ce couple peut être détecté par un dispositif du type de celui décrit dans le brevet européen 393427.

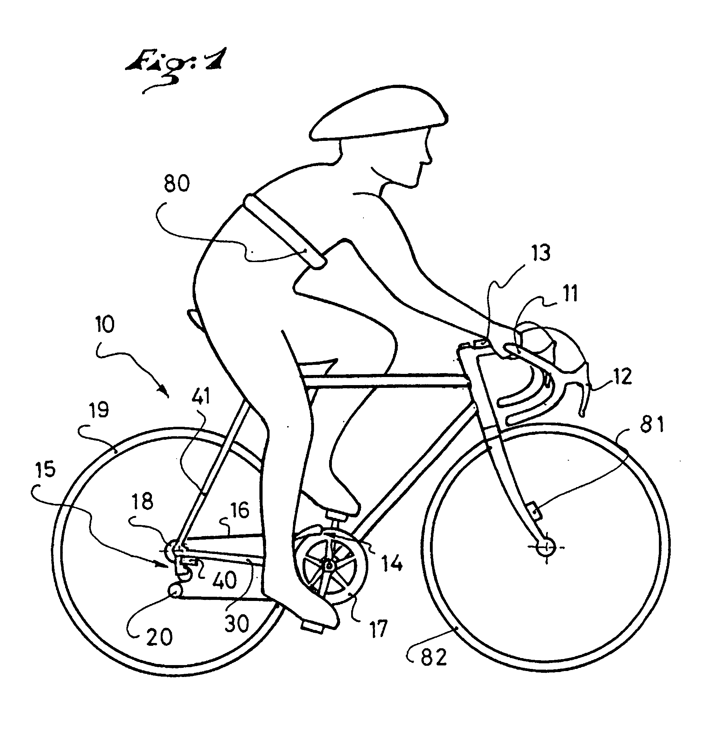

Le cardiofréquencemètre 80 (figure 1) est monté sur la poitrine du cycliste et est par exemple du type de celui décrit dans le brevet US 4 625 733.

Pour mesurer la vitesse, on prévoit un relais 81 soumis à l'influence d'un aimant (non montré) fixé à la roue avant 82.

Dans une réalisation, on prévoit un système émetteur de signaux de commande de fonctions (dérailleurs, freins) du cycle qui est distinct du système d'analyse de signaux de mesure. En variante, les systèmes de commandes d'actionnement et de mesure (et d'analyse) sont combinés, un même microprocesseur étant affecté à la réalisation des diverses fonctions.

Le boîtier 13 est étanche. Il est doté de moyens (non montrés) d'accrochage au guidon du cycle. En variante, on prévoit des moyens de montage séparés du boîtier tels qu'un collier.

De préférence, outre les interrupteurs (non montrés) de commande de changement de vitesse, on prévoit un dispositif d'affichage, notamment à cristaux liquides. Dans une réalisation, ce dispositif affiche une information d'identification du pignon de roue arrière avec lequel la chaîne 16 coopère. Par exemple chaque pignon a un rang, le rang le plus faible correspondant au diamètre le plus grand.

Lorsque le boîtier 13 est dédié à la réception de paramètres de mesures en même temps qu'à la commande d'organes de la bicyclette, le dispositif d'affichage permet, de façon classique, l'indication de paramètres usuels tels que la vitesse instantanée, la distance parcourue depuis un temps d'initialisation, et le temps pendant lequel le cycle a roulé. Il est également possible d'afficher l'état des piles.

L'émetteur/récepteur prévu dans le boîtier 13 comporte un oscillateur, un amplificateur et une antenne du type inductif à ferrite, ainsi qu'un microcontrôleur ou microprocesseur pour la commande du dérailleur, la modulation/démodulation de l'émetteur-récepteur et la gestion de l'affichage.

Le boîtier 40 fixé au dérailleur arrière comporte également un récepteur/émetteur et un microcontrôleur ou microprocesseur ainsi que les moyens de commande des électroaimants.

Le dérailleur arrière comporte de préférence un capot sous lequel est disposé le boîtier étanche 40. Ce boîtier est soit intégré au capot, soit est rapporté à ce capot de manière à ce que le montage soit simple, par exemple grâce à des rails de guidage et un clipage.

Lorsque l'électronique du boîtier 13 incorpore un certain nombre de fonctions en plus des fonctions de commande des organes du cycle, tels que l'affichage de vitesse, de puissance, ou de paramètres physiologiques du cycliste, il n'est pas indispensable que l'ensemble des récepteurs correspondants soit installé en permanence. En effet, le microprocesseur peut être programmé pour interroger périodiquement - de façon automatique ou à la demande - les diverses fonctions qu'il doit traiter, une absence de réponse n'entraînant pas un blocage mais le passage à l'interrogation d'une autre fonction.

Le système selon l'invention est ainsi de type modulaire. L'acquéreur du système de commande peut, au départ, se doter de la configuration minimale qu'il souhaite et ensuite compléter son équipement.

Bien entendu, les divers éléments électroniques du système seront de taille et de poids réduits. A cet effet, on utilisera par exemple des technologies du type "chip on board".

## Revendications

1. Système de commande et/ou de mesure sans fil pour cycle, comprenant un émetteur (13) de signaux de commande et/ou d'interrogation à faible portée prévu pour générer et transmettre des signaux codés de commande, et un récepteur de commande d'un organe du cycle dont la fréquence porteuse d'émission est comprise entre 10 et 150 kHz, **caractérisé par le fait que** les signaux transmis par l'émetteur sont des messages numériques comportant un mot code (45) propre au système.

2. Système selon la revendication 1, **caractérisé en ce qu'**il comporte des moyens pour que l'émetteur (13) transmette des signaux seulement si aucun autre message n'est émis simultanément au voisinage.

3. Système selon la revendication 2, **caractérisé en ce que** lesdits moyens comportent un détecteur d'un message émis par un système analogue.

4. Système selon la revendication 3, **caractérisé en ce qu'**il comprend un moyen pour retarder d'une durée (T_{E}) déterminée l'émission d'un message (51) de commande et/ou d'interrogation à partir du moment (t₁) de demande d'exécution de commande en cas de détection d'un message (50) provenant d'un système analogue.

5. Système selon l'une quelconque des revendications précédentes, **caractérisé en ce qu'**il comporte un moyen pour affecter à des signaux de commande et/ou d'interrogation un signal (61) indicatif d'une priorité sur d'autres signaux émis sensiblement pendant la même période.

6. Système selon l'une quelconque des revendications précédentes, **caractérisé en ce que** l'émetteur produit systématiquement deux signaux de commande et/ou d'interrogation successifs séparés dans le temps, le second signal comportant un signal d'identification de son rang de façon à ce que le récepteur puisse reconnaître ce rang afin que la commande ne soit exécutée qu'une seule fois.

7. Système selon l'une quelconque des revendications précédentes, **caractérisé en ce qu'**il comporte au moins un récepteur auquel est associé un émetteur d'accusé de réception pour produire un signal indicatif de l'exécution d'une commande vers l'émetteur principal, et **en ce que** l'émetteur de signal de commande émet un second signal de commande au bout d'un temps déterminé, par exemple égal à un nombre entier de fois la durée d'un signal de commande, quand il n'a pas reçu d'accusé de réception, le second signal de commande comportant un signal indicatif de son rang.

8. Système selon l'une quelconque des revendications précédentes, **caractérisé en ce qu'**il comprend au moins un récepteur qui, de façon périodique, est mis alternativement à l'arrêt et en écoute, la durée d'écoute étant, au cours de chaque période, faible par rapport à la durée d'arrêt, et **en ce que** le récepteur comporte un moyen de mise en écoute permanente suite à la réception d'un signal de réveil.

9. Système selon la revendication 8, **caractérisé en ce que** la période comprend deux valeurs, la première correspondant à une non-utilisation du cycle, et la seconde, plus faible, correspondant à une utilisation du cycle.

10. Système selon l'une quelconque des revendications précédentes, **caractérisé en ce que** les messages transmis par l'émetteur sont modulés en fréquence.

## Patentansprüche

1. Drahtloses Steuer- und/oder Messsystem für ein Zweirad, aufweisend einen Sender (13) von Steuer- und/oder Abfragesignalen mit schwacher Reichweite, vorgesehen zum Erzeugen und Übertragen von codierten Steuersignalen und einen Steuerempfänger eines Organs des Zweirades, dessen Sendeträgerfrequenz enthalten ist zwischen 10 und 150 kHz, **dadurch gekennzeichnet, dass** die Signale, welche durch den Sender übertragen werden, digitale Nachrichten sind, welche ein dem System eigenes Codewort (45) aufweisen.

2. System nach Anspruch 1, **dadurch gekennzeichnet, dass** es Mittel aufweist damit der Sender (13) lediglich Signale überträgt, wenn keine andere Nachricht simultan in der Nähe gesendet wird.

3. System nach Anspruch 2, **dadurch gekennzeichnet, dass** die Mittel einen Detektierer einer Nachricht, die durch ein analoges System gesendet wird, aufweist.

4. System nach Anspruch 3, **dadurch gekennzeichnet, dass** es ein Mittel zum Verzögern einer festgelegten Dauer (T_{E}) der Übertragung einer Steuerund/oder Abfragenachricht (51) aufweist von dem Moment (t₁) der Steuerausführungsanfrage im Fall einer Detektierung einer Nachricht (50), welche von einem analogen System kommt.

5. System nach irgendeinem der vorhergehenden Ansprüche, **dadurch gekennzeichnet, dass** es ein Mittel aufweist, um den Steuer- und/oder Abfragesignalen ein Signal (61) zuzuweisen, welches stellvertretend für eine Priorität gegenüber anderen Signalen, welche im Wesentlichen während der gleichen Dauer gesendet werden, ist.

6. System nach einem der vorhergehenden Ansprüche, **dadurch gekennzeichnet, dass** der Sender systematisch zwei sukzessive Steuer- und/oder Abfragesignale erzeugt, die zeitlich getrennt sind, wobei das zweite Signal ein Identifiziersignal seines Rangs in einer solchen Weise aufweist, dass der Empfänger diesen Rang erkennen kann, damit die Steuerung nur ein einziges Mal ausgeführt wird.

7. System nach irgendeinem der vorhergehenden Ansprüche, **dadurch gekennzeichnet, dass** es mindestens einen Empfänger aufweist, dem ein Sender einer Empfangsbestätigung zugeordnet ist, zum Erzeugen eines Signals, das stellvertretend ist für das Ausführen einer Steuerung in Richtung zu dem Hauptsender, und dass der Steuersignalsender ein zweites Steuersignal am Ende einer vorbestimmten Zeit sendet, z.B. gleich zu einer ganzen Zahl mal der Dauer eines Steuersignals, wenn er keine Empfangsbestätigung empfangen hat, wobei das zweite Steuersignal ein Signal aufweist, das stellvertretend für seinen Rang ist.

8. System nach irgendeinem der vorhergehenden Ansprüche, **dadurch gekennzeichnet, dass** es mindestens einen Empfänger aufweist, welcher, auf periodische Weise alternativ in den Stopp und in das Hören gesetzt wird, wobei die Hördauer im Verlaufe jeder Periode gering ist in Bezug auf die Stoppdauer, und dass der Empfänger ein Mittel zum in dauerhaften Hörzustand setzen aufweist auf den Empfang eines Wecksignals.

9. System nach Anspruch 8, **dadurch gekennzeichnet, dass** die Periode zwei Werte aufweist, wobei der erste Wert einer Nichtbenutzung des Zweirades entspricht und der zweite, schwächere Wert einer Benutzung des Zweirades entspricht.

10. System nach irgendeinem der vorhergehenden Ansprüche, **dadurch gekennzeichnet, dass** die durch den Sender übertragenen Nachrichten frequenzmoduliert sind.

## Claims

1. Wireless control and/or measuring system for a cycle, having a transmitter (13) of short distance control and/or interrogation signals provided to generate and transmit coded control signals, and a receiver for controlling a cycle member whose transmitter carrier frequency is comprised between 10 and 150 kHz, **characterized in that** the signals transmitted by the transmitter are digital messages comprising a code word (45) specific to the system.

2. System according to claim 1, **characterized in that** it comprises means for the transmitter (13) to transmit signals only if no other message is transmitted simultaneously in the vicinity.

3. System according to claim 2, **characterized in that** said means comprise a message detector transmitted by a similar system.

4. System according to claim 3, **characterized in that** it has a means for delaying the transmission of a control and/or interrogation message (51) by a predetermined duration (T_{E}) from the moment (t₁) of a command execution request when a message (50) originating from a similar system is detected.

5. System according to any of the preceding claims, **characterized in that** it comprises a means for assigning to the control and/or interrogation signals a signal (61) indicating priority over other signals transmitted substantially during the same period.

6. System according to any of the preceding claims, **characterized in that** the transmitter systematically produces two successive control and/or interrogation signals chronologically separated, the second signal comprising a signal identifying its rank such that the receiver can recognize this rank in order for the command to be executed only once.

7. System according to any of the preceding claims, **characterized in that** it comprises at least one receiver with which is associated an acknowledgment transmitter for producing a signal indicating the execution of a command to the main transmitter, and **in that** the control signal transmitter transmits a second control signal at the end of a predetermined duration, for example, equal to a whole number times the duration of a control signal, when it has not received an acknowledgment, the second control signal comprising a signal indicating its rank.

8. System according to any of the preceding claims, **characterized in that** it has at least one receiver that is periodically shut off or alternatively listening, the listening duration being short throughout each period with respect to the shut off duration, and **in that** the receiver comprises a means for continuous listening following the reception of a reactivation signal.

9. System according to claim 8, **characterized in that** the period has two values, the first one corresponding to non-use of the cycle, and the shorter, second one corresponding to use of the cycle.

10. System according to any of the preceding claims, **characterized in that** the messages transmitted by the transmitter are frequency modulated.
